# FASCICULE DE BREVET EUROPEEN

(11) **EP 3 208 176 B1**
(45) Date de publication et mention de la délivrance du brevet: **29.07.2020**
(21) Numéro de dépôt: 17156982.5
(22) Date de dépôt: 20.02.2017
(51) Int. Cl.: B62B 5/00

(54) **MODULE LOGISTIQUE AVEC VOLET ANTICHUTE**
LOGISTIKMODUL MIT FALLVERHINDERUNGSKLAPPE
LOGISTIC MODULE WITH FALL-PREVENTION FLAP

(30) Priorité: 19.02.2016 EP 16305202
(43) Date de publication de la demande: 23.08.2017
(73) Titulaire: YTHALES INVEST, 37520 La Riche (FR)
(72) Inventeur: CHERBONNIER, Yves, 37520 La Riche (FR)
(74) Mandataire: den Braber, Gérard Paul

(56) Documents cités:
- WO-A1-2015/022466
- BE-A6- 1 012 707
- JP-A- H1 148 981
- JP-A- 2002 193 106

## Description

### DOMAINE TECHNIQUE

Un aspect de l'invention concerne un module logistique de type conteneur dans lequel des objets peuvent être chargés, notamment des marchandises. Le module logistique peut être utilisé, par exemple, pour transporter des marchandises vers des magasins afin de les approvisionner et pour stocker et transporter au sein d'un magasin des marchandises destinées à être mises dans des rayons de vente.

### ETAT DE LA TECHNIQUE ANTERIEURE

La publication brevet WO 2015/022466 A1 décrit un volet antichute apte à obturer, au moins partiellement, un accès à un espace de chargement d'un module logistique de type conteneur. Le volet antichute peut être apposé sur le module logistique au moyen de boucles de fixation autour d'un montant qui se situe sur un côté vertical de l'accès à l'espace de chargement. Le volet antichute est muni d'un support de baguette pouvant retenir une baguette dans une orientation verticale lorsque le volet antichute est apposé sur le module logistique. Le support de baguette peut coopérer avec la baguette introduite dans le support de baguette de sorte que la baguette et le support de baguette assurent une tension verticale du volet antichute. Cela afin d'éviter un affalement du volet antichute lorsque le volet antichute est apposé sur le module logistique. Le document JPH1148981 A décrit un chariot, qui comprend une base et trois ridelles fixes, deux ridelles de côté et une ridelle de fond. Une ridelle avant s'attache à et se détache d'une partie avant de deux ridelles de côté.

### EXPOSE DE L'INVENTION

Il existe un besoin pour une autre solution, potentiellement plus économique, permettant une flexibilité d'utilisation d'un volet antichute.

Selon un aspect de l'invention tel que défini dans la revendication 1, un module logistique comprend :
- un espace de chargement,
- un accès à l'espace de chargement,
- un montant côtoyant un côté de l'accès à l'espace de chargement,
- un volet antichute apte à obturer au moins partiellement l'accès à l'espace de chargement, le volet antichute comprenant une boucle de fixation autour du montant, la boucle de fixation se situant à une extrémité d'un bord du volet antichute côtoyant le montant,
- un organe de verrouillage disposé sur le montant, l'organe de verrouillage étant apte à maintenir la boucle de fixation en position fixe sur le montant lorsque le volet antichute exerce une force de tension sur la boucle de fixation, l'organe de verrouillage présentant une des caractéristiques suivantes :
   - l'organe de verrouillage comprend une surface extérieure munie d'éléments auto agrippant apte être en prise avec la boucle de fixation, et
   - l'organe de verrouillage constitue un épaississement sur le montant contre lequel la boucle de fixation est en butée.

L'organe de verrouillage contribue à maintenir le volet antichute suffisamment bien tendu, même si le volet antichute n'est pas bien adapté pour son application dans un module logistique correspondant mais sans organe de verrouillage. Lorsque le volet antichute est suffisamment bien tendu, le volet antichute peut efficacement empêcher une chute de marchandises présentes dans le module logistique, par exemple, lors d'un transport. Le volet antichute n'a pas besoin de comprendre un ou plusieurs éléments spécifiques pour maintenir le volet antichute suffisamment bien tendu comme, par exemple, une baguette et un support de baguette.

A des fins d'illustration, quelques modes de réalisation de l'invention sont décrits en détail en référence aux dessins annexés. Un tel mode de réalisation peut comprendre des caractéristiques définies dans un ou plusieurs revendications dépendantes annexées à la description. Une telle caractéristique peut donner un avantage supplémentaire, comme cela apparaîtra dans la description détaillée du mode de réalisation concerné.

### DESCRIPTION SOMMAIRE DES DESSINS

- La figure 1 est une vue schématique de face d'un volet antichute.
- La figure 2 est une vue schématique de dos du volet antichute.
- La figure 3 est une vue schématique en perspective d'un module logistique nu comprenant des organes de verrouillage.
- La figure 4 est une vue schématique en perspective d'un module logistique dans un état fermé, le module logistique pouvant être obtenu par fixation du volet antichute au module logistique nu.
- La figure 5 est une vue schématique en perspective du module logistique dans un état ouvert.
- La figure 6 est une vue schématique en perspective d'une partie avant gauche supérieure du module logistique.
- La figure 7 est une vue schématique en perspective d'un module logistique nu alternatif sur lequel le volet antichute peut être fixé.
- La figure 8 est une vue schématique en perspective d'un organe de verrouillage alternatif.
- La figure 9 est une vue schématique en perspective d'un autre organe de verrouillage alternatif.
- La figure 10 est une vue schématique en perspective d'un module logistique alternatif.
- La figure 11 est une vue schématique en perspective d'encore un autre organe de verrouillage alternatif.
- La figure 12 est une vue schématique en perspective d'un autre module logistique alternatif.
- La figure 13 est une vue schématique en perspective d'encore un autre organe de verrouillage alternatif.
- La figure 14 est une vue schématique en perspective d'encore un autre module logistique alternatif.
- La figure 15 est une vue schématique en perspective d'encore un autre organe de verrouillage alternatif.
- La figure 16 est une vue schématique en perspective d'encore un autre module logistique alternatif.
- La figure 17 est une vue schématique en perspective d'encore un autre organe de verrouillage alternatif.
- La figure 18 est une vue schématique en perspective d'encore un autre module logistique alternatif.

### DESCRIPTION DE QUELQUES MODES DE REALISATION

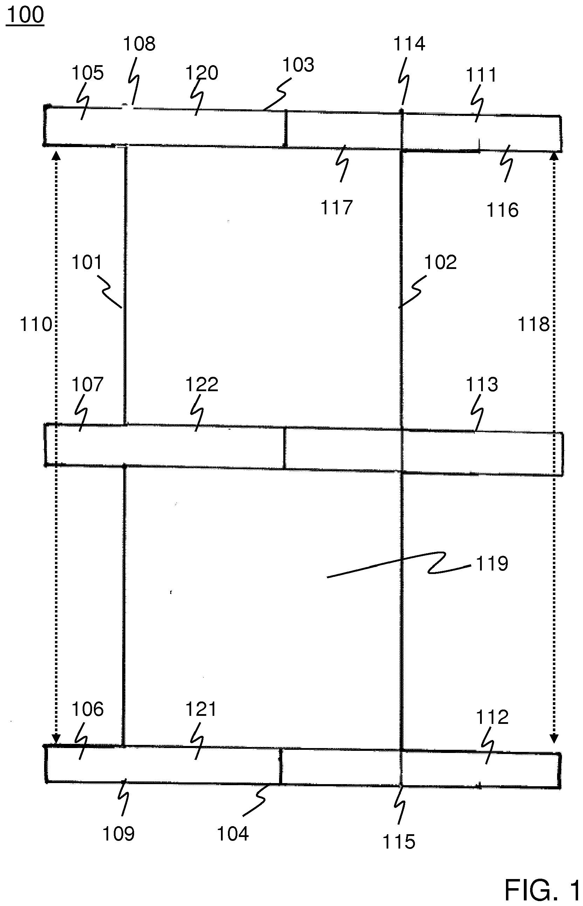

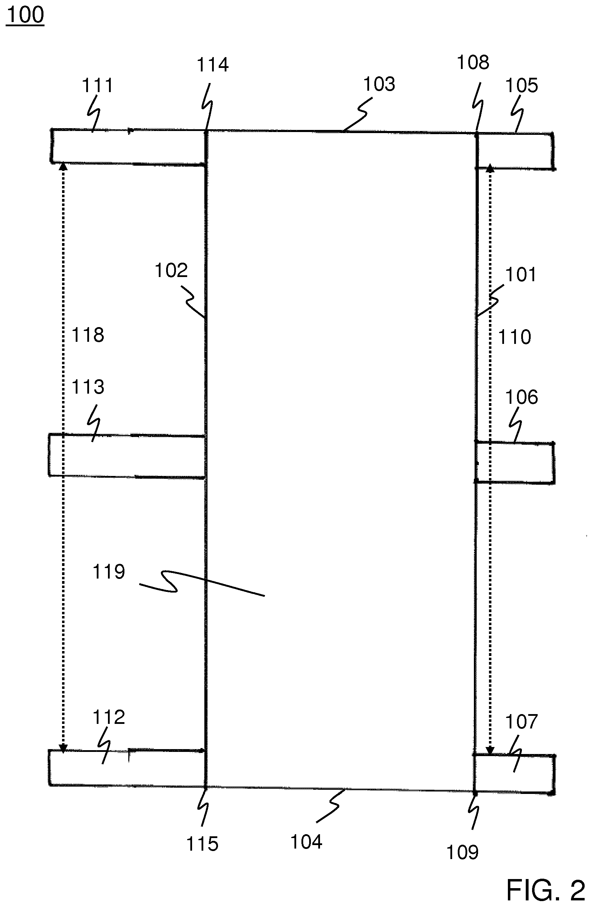

Les figures 1 et 2 illustrent schématiquement un volet antichute 100. La figure 1 présente une vue schématique de face du volet antichute 100. La figure 2 présente une vue schématique de dos du volet antichute 100. Le volet antichute 100 peut être apposé sur un module logistique, tel qu'un conteneur de type roll, ou tout autre type de conteneur, afin d'obturer une ouverture laissée entre deux montants du module logistique.

Le volet antichute 100 comprend deux bords longitudinaux : un bord gauche 101 et un bord droit 102. Ces deux bords longitudinaux sont orientés verticalement lorsque le volet antichute 100 est apposé sur un module logistique. Le volet antichute 100 comprend deux bords transversaux : un bord supérieur 103 et un bord inférieur 104. Ces deux bords transversaux, sont orientés horizontalement lorsque le volet antichute 100 est apposé sur un module logistique.

Le bord gauche 101 du volet antichute 100 est muni de trois rubans de fixation 105, 106, 107. Ces rubans de fixation seront conjointement désignés rubans de fixation gauches 105, 106, 107 dans ce qui suit. Un des rubans de fixation gauche 105 se situe à une extrémité supérieure 108 du bord gauche 101. Ce ruban de fixation sera désigné ruban de fixation gauche supérieur 105 dans ce qui suit. Un autre ruban de fixation 106 se situe à une extrémité inférieure 109 du bord gauche 101, opposée à l'extrémité supérieur 108 de celui-ci. Cet autre ruban de fixation sera désigné ruban de fixation gauche inférieur 106 dans ce qui suit. Encore un autre ruban de fixation 107 se situe approximativement à mi-chemin entre les deux extrémités précitées 108, 109 du bord gauche 101 du volet antichute 100. Ce ruban de fixation sera désigné ruban de fixation gauche médian 107 dans ce qui suit.

Le ruban de fixation gauche supérieur 105 peut être replié sur lui-même en boucle autour d'un montant d'un module logistique. Le ruban de fixation gauche supérieur 105 peut être maintenu en boucle au moyen, par exemple, d'un rivet ou d'un autre élément de maintien. Il en va de même pour le ruban de fixation gauche inférieur 106 et le ruban de fixation gauche médian 107. Ainsi, les rubans de fixation gauches 105, 106, 107 permettent de fixer le bord gauche 101 du volet antichute 100 au montant en question du module logistique. Le bord gauche 101 côtoiera ainsi ce montant qui pourra constituer un axe de pivotement pour le volet antichute 100.

Il existe un espacement 110 entre le ruban de fixation gauche supérieur 105 et le ruban de fixation gauche inférieur 106. Cet espacement sera désigné espacement de fixation gauche 110 dans ce qui suit.

Le ruban de fixation gauche supérieur 105 peut comprendre des surfaces extérieures présentant des reliefs et des creux, offrant des aspérités sous formes de maillages ou de trames, par exemple. Ces caractéristiques des surfaces extérieures font que ruban de fixation gauche supérieur 105 s'apparente par équivalence à une partie velours d'un ruban auto agrippant. Il en va de même pour le ruban de fixation gauche inférieur 106 et le ruban de fixation gauche médian 107. Les trois rubans de fixation gauches 105, 106, 107 peuvent être issus, par exemple, de tissage en fil polypropylène (PP), polyéthylène (PE), ou autres matières.

Le bord droit 102 du volet antichute 100 comprend également trois rubans de fixation 111, 112, 113. Ces rubans de fixation seront conjointement désignés rubans de fixation droits 111, 112, 113 dans ce qui suit. Un des rubans de fixation droits 111 se situe à une extrémité supérieure 114 du bord droit 102. Ce ruban de fixation sera désigné ruban de fixation droit supérieur 111 dans ce qui suit. Un autre ruban de fixation 112 se situe à une extrémité inférieure 115 du bord droit 102, opposée à l'extrémité supérieure 114 de celui-ci. Cet autre ruban de fixation sera désigné ruban de fixation droit inférieur 112 dans ce qui suit. Encore un autre ruban de fixation 113 se situe approximativement à mi-chemin entre les deux extrémités précitées 114, 115 du bord droit 102 du volet antichute 100. Ce ruban de fixation sera désigné ruban de fixation droit médian 113 dans ce qui suit.

Le ruban de fixation droit supérieur 111 peut être de type auto-agrippant. Les figures 1 et 2 illustrent un exemple dans lequel le ruban de fixation droit supérieur 111 comprend une zone 116 munie d'éléments auto-agrippant de type velours, et une autre zone 117 munie des éléments auto-agrippant de type crochet. Ces types d'éléments auto-agrippant peuvent être inversés. Il en va de même pour le ruban de fixation droit inférieur 112 et le ruban de fixation droit médian 113, qui peuvent également comprendre des zones auto-agrippant similaires aux zones 116, 117 précitées.

Les trois rubans de fixation droits 111, 112, 113 permettent de fixer de façon amovible le bord droit 102 du volet antichute 100 à un montant d'un module logistique. Lorsque les rubans de fixation droits 111, 112, 113 sont détachés, le volet antichute 100 peut pivoter autour d'un autre montant auquel le bord gauche 101 du volet antichute 100 est fixé comme décrit dans ce qui précède. Lorsque les rubans de fixation droits 111, 112, 113 sont attachés au montant en face de l'autre montant, qui constitue l'axe de pivotement, le volet antichute 100 peut obturer une ouverture entre l'un et l'autre montant afin d'éviter une chute de marchandises.

Il existe un espacement 118 entre le ruban de fixation droit supérieur 111 et le ruban de fixation droit inférieur 112. Cet espacement sera désigné espacement de fixation droit 118 dans ce qui suit. L'espacement de fixation droit 118 peut correspondre à espacement de fixation gauche 110, notamment lorsque le volet antichute 100 est rectangulaire.

Le volet antichute 100 comprend une feuille d'obturation 119 relativement légère, qui sera typiquement souple. La feuille d'obturation 119 peut être formée à base de matériau plastique comme, par exemple, à base de polyéthylène, à base de polychlorure de vinyle, fréquemment désigné par le sigle PVC, ou tout autre matériau plastique approprié. La feuille d'obturation 119 peut comprendre une trame en matière plastique munie d'un revêtement de même nature. Les rubans de fixation gauches 105, 106, 107 et les rubans de fixation droits 111, 112, 113 sont solidaires à la feuille d'obturation 119.

Le volet antichute 100 peut, en outre, comprendre trois bandes de renfort : une bande de renfort supérieure 120, une bande de renfort inférieure 121, et une bande de renfort médiane 122. Ces trois bandes de renforts 120, 121, 122 sont solidaires à la feuille d'obturation 119. La bande de renfort supérieure 120 constitue un renforcement de la feuille d'obturation 119 dans une zone qui s'étend du ruban de fixation gauche supérieur 105 au ruban de fixation droit supérieur 111. De même, la bande de renfort inférieure 121 constitue un renforcement dans une zone qui s'étend du ruban de fixation gauche inférieur 106 au ruban de fixation droit inférieur 112, et la bande de renfort médiane 122 constitue un renforcement dans une zone du ruban de fixation droit médian 107 au ruban de fixation droit médian 113. Les trois bandes de renfort 120, 121, 122 confèrent une rigidité au volet antichute 100 afin que celui-ci résiste à des poussées que des marchandises peuvent exercer sur le volet antichute 100, notamment sur la feuille d'obturation 119.

La figure 1 illustre un mode de réalisation où les rubans de fixation gauches 105, 106, 107 et les rubans de fixation droits 111, 112, 113 constituent des prolongements des trois bandes de renfort 120, 121, 122. Plus précisément, le ruban de fixation gauche supérieur 105 constitue un prolongement de la bande de renfort supérieure 120 à une extrémité gauche de celle-ci. Le ruban de fixation droit supérieur 111 constitue un prolongement de la bande de renfort supérieure 120 à une extrémité droite de celle-ci. De même, le ruban de fixation gauche médian 107 constitue un prolongement de la bande de renfort médiane 122 à une extrémité gauche de celle-ci. Le ruban de fixation droit médian 113 constitue un prolongement de la bande de renfort médiane 122 à une extrémité droite de celle-ci. Le ruban de fixation gauche inférieur 106 constitue un prolongement de la bande de renfort inférieure 121 à une extrémité gauche de celle-ci. Le ruban de fixation droit inférieur 112 constitue un prolongement de la bande de renfort inférieure 121 à une extrémité droite de celle-ci. Les bandes de renfort 120, 121, 122 peuvent s'apparenter à des sangles.

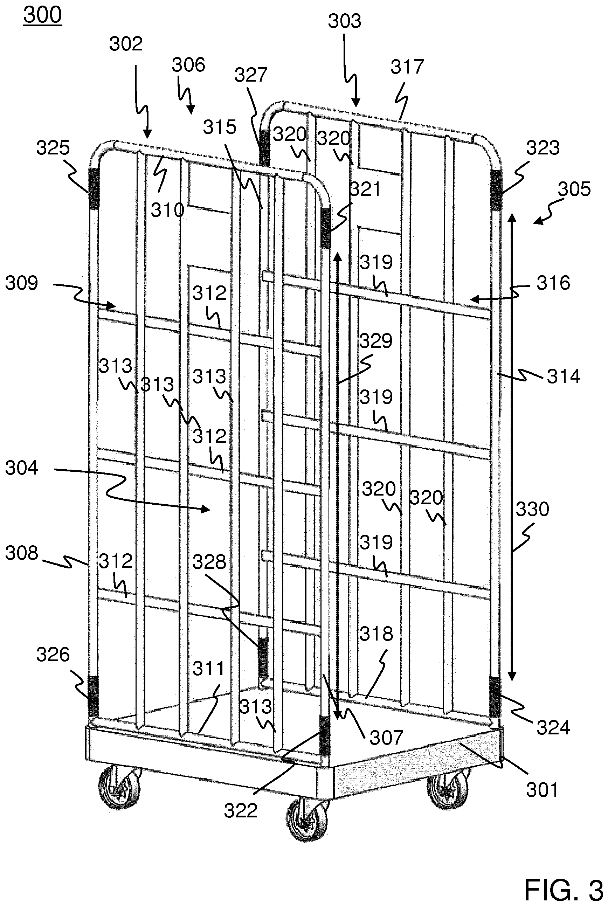

La figure 3 illustre schématiquement un module logistique nu 300 sur lequel le volet antichute 100 illustré à la figure 1 peut être fixé afin d'obtenir un module logistique complet. Cette figure présente une vue schématique en perspective du module logistique nu 300. Le module logistique nu 300 illustré à la figure 3 est en forme d'un roll conteneur et sera ainsi désigné roll nu 300 dans ce qui suit pour des raisons de convenance.

Le roll nu 300 comprend une embase 301. Cette embase 301 peut comprendre, par exemple, un cadre dans lequel un plancher a été aménagé. Le roll nu 300 comprend en outre deux parois 302, 303 sous forme de ridelles : une ridelle qui sera désignée ridelle gauche 302 dans ce qui suit, et une autre ridelle qui sera désignée ridelle droite 303. L'embase 301, la ridelle gauche 302, et la ridelle droite 303 définissent conjointement un espace de chargement 304 du roll nu 300.

Le roll nu 300 présente deux ouvertures 305, 306 laissées entre la ridelle gauche 302, et la ridelle droite 303. Chacune de ces deux ouvertures 305, 306 peut constituer un accès à l'espace de chargement 304 du roll nu 300. Une de ces deux ouvertures sera désignée accès avant 305 dans ce qui suit pour des raisons de convenance. L'autre ouverture sera désignée accès arrière 306 dans ce qui suit.

La ridelle gauche 302 comprend deux montants périphériques 307, 308. Un de ces deux montants périphériques sera désignée montant périphérique avant gauche 307 dans ce qui suit pour des raisons de convenance. L'autre montant périphérique sera désigné montant périphérique arrière gauche 308 dans ce qui suit. Dans ce mode de réalisation, le montant périphérique avant gauche 307 et le montant périphérique arrière gauche 308 font partie d'une grille 309 qui forme principalement la ridelle gauche 302. Cette grille 309 comprend en outre deux traverses périphériques qui seront désignés traverse périphérique supérieure gauche 310 et traverse périphérique inférieure gauche 311, ainsi que des traverses intermédiaires 312. Ces traverses 310, 311, 312 s'étendent entre le montant périphérique avant gauche 307 et le montant périphérique arrière gauche 308. La grille 309 comprend en outre des montants intermédiaires 313 qui s'étendent entre la traverse périphérique supérieure gauche 310 et la traverse périphérique inférieure gauche 311.

La ridelle droite 303 possède une structure similaire, visible à la figure 3. La ridelle droite 303 comprend un montant périphérique avant droit 314 et un montant périphérique arrière droit 315. Ces montants périphériques 314, 315 font partie d'une grille 316 qui forme principalement la ridelle droite 303. La ridelle droite 303 comprend en outre une traverse périphérique supérieure droite 317, une traverse périphérique inférieure droite 318, et des traverses intermédiaires 319 disposées entre le montant périphérique avant droit 314 et le montant périphérique arrière droit 315, ainsi que des montants intermédiaires 320 qui s'étendent entre la traverse périphérique supérieure droite 317 et la traverse périphérique inférieure droite 318.

Le roll comprend une pluralité de organes de verrouillage 321-328 fixées sur les montants périphériques 307, 308 de la ridelle gauche 302 et sur les montants périphériques 314, 315 de la ridelle droite 303.

Plus en détail, deux organes de verrouillage 321, 322 sont fixés sur le montant périphérique avant gauche 307 de la ridelle gauche 302. Un organe de verrouillage 321 est fixé sur une partie supérieure de ce montant périphérique 307, l'autre organe de verrouillage 322 étant fixé sur une partie inférieure. L'un et l'autre organe de verrouillage seront respectivement désignés organe de verrouillage avant gauche supérieur 321 et organe de verrouillage avant gauche inférieur 322 dans ce qui suit.

Il existe un espacement 329 entre l'organe de verrouillage avant gauche supérieur 321 et l'organe de verrouillage avant gauche inférieur 322. Cet espacement sera désigné espacement de verrouillage gauche 329 dans ce qui suit. L'espacement de verrouillage gauche 329 correspond sensiblement à l'espacement de fixation gauche 110 sur le volet antichute 100 illustrée aux figures 1 et 2.

De même, deux organes de verrouillage 323, 324 sont fixés sur le montant périphérique avant droit 314 de la ridelle droite 303. Un organe de verrouillage 323 est fixé sur une partie supérieure de ce montant périphérique, l'autre organe de verrouillage 324 étant fixé sur une partie inférieure. L'un et l'autre organe de verrouillage seront respectivement désignés organe de verrouillage avant droit supérieur 323 et organe de verrouillage avant droit inférieur 324 dans ce qui suit.

Il existe un espacement 330 entre l'organe de verrouillage avant droit supérieur 323 et l'organe de verrouillage avant droit inférieur 324. Cet espacement sera désigné espacement de verrouillage droit 330 dans ce qui suit. L'espacement de verrouillage droit 330 correspond sensiblement à l'espacement de fixation droit 118 sur le volet antichute 100 illustrée aux figures 1 et 2.

Deux organes de verrouillage 325, 326 sont fixés sur le montant périphérique arrière gauche 308 de la ridelle gauche 302. Un organe de verrouillage 325 est fixé sur une partie supérieure de ce montant périphérique, l'autre organe de verrouillage 326 étant fixé sur une partie inférieure. Il existe un espacement entre ces deux organes de verrouillage 325, 326 qui peut correspondre à l'espacement de fixation gauche 110 ou l'espacement de fixation droit 118 sur le volet antichute 100 illustrée aux figures 1 et 2

Deux organes de verrouillage 327, 328 sont fixés sur le montant périphérique arrière droit 315 de la ridelle droite 303. Un organe de verrouillage 327 est fixé sur une partie supérieure de ce montant périphérique, l'autre organe de verrouillage 328 étant fixé sur une partie inférieure. Il existe un espacement entre ces deux organes de verrouillage 325, 326 qui peut correspondre à l'espacement de fixation gauche 110 ou l'espacement de fixation droit 118 sur le volet antichute 100 illustrée aux figures 1 et 2.

Dans le mode de réalisation illustré à la figure 3, les organes de verrouillage 321-328 présentent une surface extérieure comprenant des éléments auto agrippant, par exemple, de type crochet. Par exemple, les organes de verrouillage 321-328 peuvent être des feuilles de revêtement auto-agrippant qui sont apposées sur les montants périphériques 307, 308 de la ridelle gauche 302 et les montants périphériques 314, 315 de la ridelle droite 303. Par exemple, les feuilles de revêtement auto-agrippant peuvent être apposées, par exemple, par collage. Une feuille de revêtement auto-agrippant peut être autocollante.

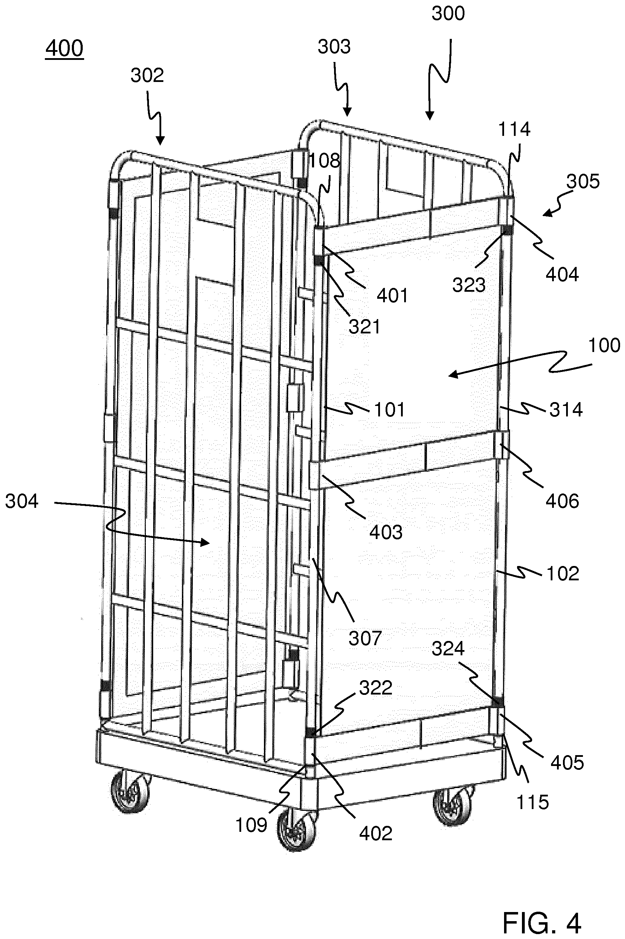

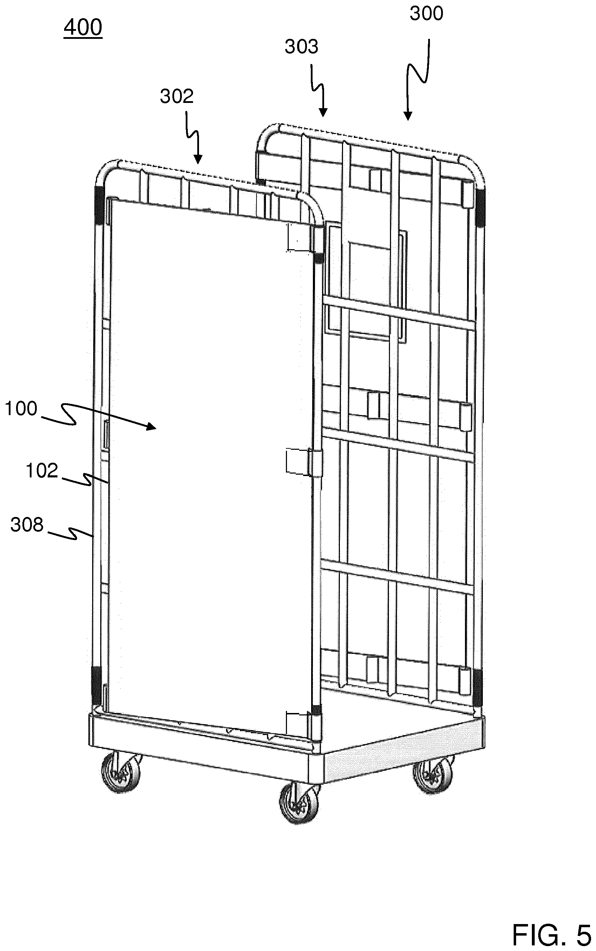

Les figures 4 et 5 illustrent schématiquement un module logistique 400 pouvant être obtenu par fixation du volet antichute 100 illustré aux figures 1 et 2 au roll nu 300 illustré à la figure 3. Les figures 4 et 5 présentent une vue schématique en perspective du module logistique 400, qui sera désignée roll complet 400 dans ce qui suit pour des raisons de convenance. Les figures 4 et 5 comprennent des références identiques à celles présentes dans les figures 1, 2 et 3. Une telle référence identique désigne un élément similaire, voire identique.

La figure 4 illustre le roll complet 400 dans un état fermé. Le volet antichute 100 est en position fermée. En cette position, le volet antichute 100 obture au moins partiellement l'accès avant 305 à l'espace de chargement 304. La figure 5 illustre roll complet 400 dans un état ouvert. Le volet antichute 100 est en position ouverte et rabattue.

Le volet antichute 100 comprend trois boucles de fixation 401, 402, 403 autour du montant périphérique avant gauche 307 de la ridelle gauche 302. Ces boucles de fixation seront conjointement désignées boucles de fixation fixe 401, 402, 403 dans ce qui suit. Une boucle de fixation fixe supérieure 401 se situe à l'extrémité supérieure 108 du bord gauche 101 du volet antichute 100. Une boucle de fixation fixe inférieure 402 se situe à l'extrémité inférieure 109 du bord gauche 101 du volet antichute 100. Une boucle de fixation fixe médiane 403 se situe approximativement à mi-chemin entre les deux extrémités précitées 108, 109 du bord gauche 101 du volet antichute 100.

La boucle de fixation fixe supérieure 401 est obtenue en repliant le ruban de fixation gauche supérieur 105 du volet antichute 100, illustré aux figures 1 et 2, sur lui-même en boucle. Le ruban de fixation gauche supérieur 105 est replié sur lui-même en boucle autour du montant périphérique avant droit 314 de la ridelle gauche 302 du roll nu 300 illustré à la figure 3. Le ruban de fixation gauche supérieur 105 peut être maintenu en boucle au moyen, par exemple, d'un rivet ou d'un autre élément de maintien. La boucle de fixation fixe inférieure 402 et la boucle de fixation fixe médiane 403 peuvent être obtenues de la même façon respectivement à partir du ruban de fixation gauche inférieur 106 et du ruban de fixation gauche médian 107 du volet antichute 100 illustré aux figures 1 et 2.

En position fermée, illustré à la figure 4, le volet antichute 100 comprend trois boucles de fixation 404, 405, 406 autour du montant périphérique avant droit 314 de la ridelle droite 303. Ces boucles de fixation seront conjointement désignées boucles de fixation amovibles 404, 405, 406 dans ce qui suit. Une boucle de fixation amovible supérieure 404 se situe à l'extrémité supérieure 114 du bord droit 102 du volet antichute 100. Une boucle de fixation amovible inférieure 405 se situe à l'extrémité inférieure 115 du bord droit 102 du volet antichute 100. Une boucle de fixation amovible médiane 406 se situe approximativement à mi-chemin entre les deux extrémités précitées 114, 115 du bord droit 102 du volet antichute 100.

La boucle de fixation amovible supérieure 404 est obtenue en repliant le ruban de fixation droit supérieur 111 du volet antichute 100, illustré aux figures 1 et 2, sur lui-même en boucle. Le ruban de fixation gauche supérieur 105 est replié sur lui-même en boucle autour du montant périphérique avant droit 314 de la ridelle droite 303 du roll nu 300 illustré à la figure 3. Le ruban de fixation droit supérieur 111 peut être maintenu en boucle au moyen, par exemple, des éléments auto-agrippant précités de type crochet et velours. La boucle de fixation amovible inférieure 405 et la boucle de fixation amovible médiane 406 peuvent être obtenues de la même façon respectivement à partir du ruban de fixation droit inférieur 112 et du ruban de fixation droit médian 113 du volet antichute 100 illustré aux figures 1 et 2.

Plus en détails, la boucle de fixation fixe supérieure 401 est en prise avec l'organe de verrouillage avant gauche supérieur 321. L'organe de verrouillage avant gauche supérieur 321 maintien ainsi la boucle de fixation fixe supérieure 401 en position fixe sur le montant périphérique avant gauche 307, même lorsque le volet antichute 100 exerce une force de tension sur la boucle de fixation fixe supérieure 401. Autrement dit, l'organe de verrouillage avant gauche supérieur 321 empêche un déplacement de la boucle de fixation fixe supérieure 401 lorsque, par exemple, une force de tension est exercée sur l'extrémité inférieure 109 du bord gauche 101 du volet antichute 100.

La boucle de fixation fixe inférieure 402 est en prise avec l'organe de verrouillage avant gauche inférieur 322. L'organe de verrouillage avant gauche inférieur 322 maintien ainsi la boucle de fixation fixe inférieure 402 en position fixe sur le montant périphérique avant gauche 307, même lorsque le volet antichute 100 exerce une force de tension sur la boucle de fixation fixe inférieure 402. Autrement dit, l'organe de verrouillage avant gauche inférieur 322 empêche un déplacement de la boucle de fixation fixe inférieure 402 lorsque, par exemple, une force de tension est exercée sur l'extrémité supérieure 108 du bord gauche 101 du volet antichute 100.

Les deux organes de verrouillage 321, 322 sur le montant périphérique avant gauche 307 de la ridelle gauche 302 permettent donc d'obtenir une tension souhaitée du volet antichute 100 sur son bord gauche 101 et de maintenir cette tension. Cela contribue significativement à éviter une chute de marchandises placées dans l'espace de chargement 304 du roll complet 400.

La boucle de fixation amovible supérieure 404 est en prise avec l'organe de verrouillage avant droit supérieur 323. L'organe de verrouillage avant droit supérieur 323 maintien ainsi la boucle de fixation amovible supérieure 404 en position fixe sur le montant périphérique avant droit 314, même lorsque le volet antichute 100 exerce une force de tension sur la boucle de fixation amovible supérieure 404. Autrement dit, l'organe de verrouillage avant droit supérieur 323 empêche un déplacement de la boucle de fixation amovible supérieure 404 lorsque, par exemple, une force de tension est exercée sur l'extrémité inférieure 115 du bord droit 102 du volet antichute 100.

La boucle de fixation amovible inférieure 405 est en prise avec l'organe de verrouillage avant droit inférieur 324. L'organe de verrouillage avant droit inférieur 324 maintien ainsi la boucle de fixation amovible inférieure 405 en position fixe sur le montant périphérique avant droit 314, même lorsque le volet antichute 100 exerce une force de tension sur boucle de fixation amovible inférieure 405. Autrement dit, l'organe de verrouillage empêche un déplacement de la boucle de fixation amovible inférieure 405 lorsque, par exemple, une force de tension est exercée sur l'extrémité supérieure 114 du bord droit 102 du volet antichute 100.

Les deux organes de verrouillage 323, 324 sur le montant périphérique avant droit 314 de la ridelle droite 303 permettent donc d'obtenir une tension souhaitée du volet antichute 100 sur son bord droit 102 et de maintenir cette tension. Cela contribue aussi significativement à éviter une chute de marchandises placées dans l'espace de chargement 304 du roll complet 400.

En position fermée, illustré à la figure 4, le volet antichute 100 peut être convenablement tendu grâce aux organes de verrouillage 321-324 sur le montant périphérique avant gauche 307 et sur le montant périphérique avant droit 314. Le volet antichute 100 ainsi assure une fonction antichute efficace comme l'identique son nom. Des marchandises placées dans le roll nu 300 sont retenues dans celui-ci, grâce au volet antichute 100 dans sa position fermée. Lors d'un transport, une marchandise peut se déplacer en direction de l'accès avant 305 à l'espace de chargement 304 du roll nu 300. Cette marchandise se bute alors contre le volet antichute 100, qui obture l'accès avant 305, évitant ainsi une chute de la marchandise en question.

A des fins d'explications, il est maintenant supposé que le roll nu 300 illustré à la figure 3 ne comprend aucun organe de verrouillage. Dans cette hypothèse, le volet antichute 100 aurait tendance à s'affaler par absence de tension verticale. Cela est dû au fait que les traverses intermédiaires 312, 319 du roll ne présentent aucun espacement qui correspond suffisamment bien à l'espacement de fixation gauche 110 ou à l'espacement de fixation droit 118 du volet antichute 100 illustré aux figures 1 et 2. Un affalement, effondrement, du volet antichute 100, par manque de tension, peut faire que le volet antichute 100 n'a pas une tenue suffisamment bonne pour maintenir des marchandises dans le roll nu 300. Il y a un risque de chute des marchandises.

Un avantage de la solution présentée est que le volet antichute 100 n'a pas besoin d'être adapté au roll nu 300 sur lequel il est fixé. De plus, le volet antichute 100 n'a pas besoin d'autres adaptations ce qui rend la solution flexible et économique.

Dans le mode de réalisation illustré aux figures 4 et 5, aucun organe de verrouillage n'est prévu pour les boucles de fixation médianes 403, 406 précitées. La boucle de fixation fixe médiane 403 peut être en butée contre une des traverses intermédiaires 312 illustrées à la figure 3. La boucle de fixation fixe médiane 403 peut ainsi être verrouillée par cette traverse intermédiaire. De même, la boucle de fixation amovible médiane 406 peut être en butée contre une des traverses intermédiaires 319 illustrées à la figure 3. La boucle de fixation amovible médiane 406 peut ainsi être verrouillée par cette traverse intermédiaire.

Dans l'état ouvert, illustré à la figure 5, les rubans de fixation droits 111, 112, 113 du volet antichute 100 illustrée à la figure 1 peuvent fixer de façon amovible le bord droit 102 du volet antichute 100 au montant périphérique arrière gauche 308 de la ridelle gauche 302. Lorsque cette fixation a été réalisée, le volet antichute 100 côtoie la ridelle gauche 302 de façon stable.

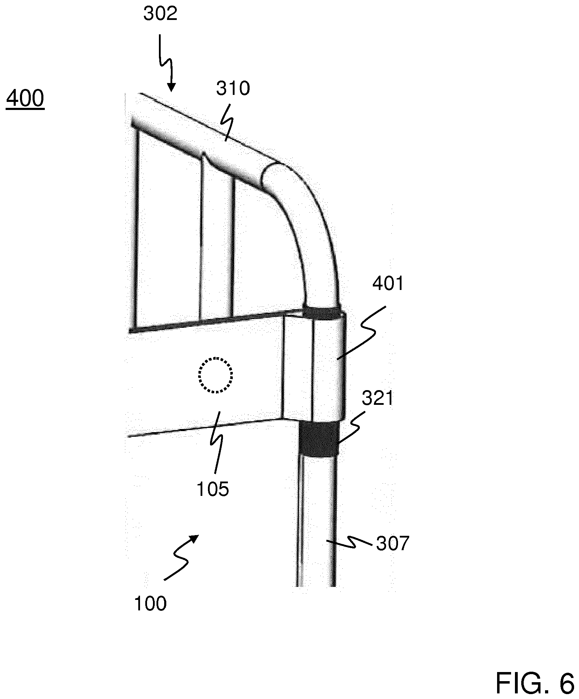

La figure 6 illustre schématiquement une partie avant gauche supérieure du roll complet 400, La figure 6 présente une vue schématique en perspective de la partie avant gauche supérieure. La boucle de fixation fixe supérieure 401 et l'organe de verrouillage avant gauche supérieur 321 sont visibles sur cette figure, ainsi qu'une partie de la ridelle gauche 302. Sur la figure 6, le volet antichute 100 est en position semi-ouverte, entre la position fermée illustrée à la figure 4 est la position ouverte illustrée à la figure 5.

La boucle de fixation fixe supérieure 401 est serrée autour de l'organe de verrouillage avant gauche supérieur 321, qui se trouve sur le montant périphérique avant gauche 307 de la ridelle gauche 302. Par exemple, un opérateur peut exercer un couple de serrage sur le ruban de fixation gauche supérieur 105, aussi illustré aux figures 1 et 2, lorsque l'opérateur forme la boucle de fixation fixe supérieure 401 dans une opération de fixation du volet antichute 100 sur le roll nu 300 illustré à la figure 3. Puis, l'opérateur fixe cette boucle à demeure au moyen, par exemple, d'un rivet et d'une rondelle, ou d'un ou plusieurs autres éléments de fixation. Cela solidarise l'ensemble et empêche de ce fait un glissement vers le bas de la boucle de fixation fixe supérieure 401. Il convient de souligner que ce type d'opération peut aussi être réalisé sur un montant rectangulaire, carré, ou ayant d'autres formes.

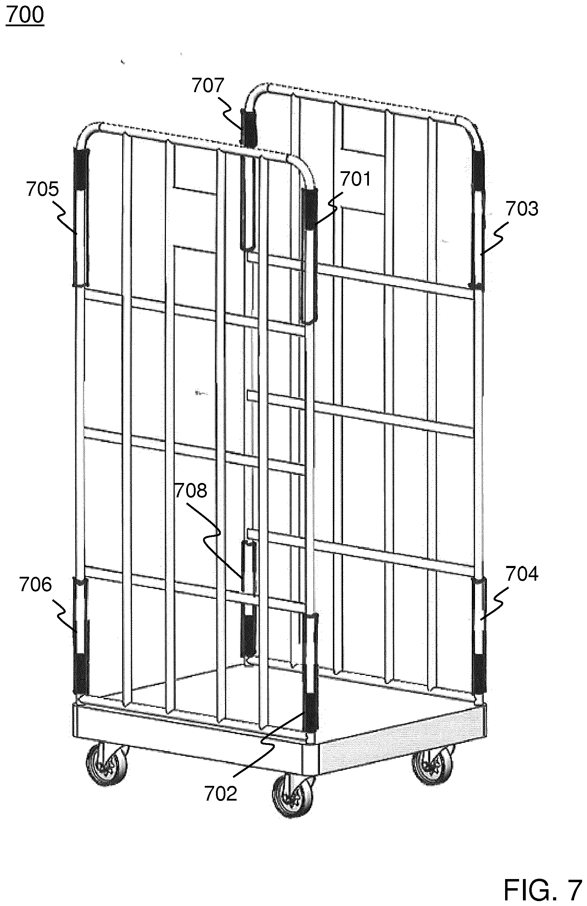

La figure 7 illustre schématiquement un module logistique nu alternatif 700 sur lequel le volet antichute 100 illustré à la figure 1 peut être fixé. Cette figure présente une vue schématique en perspective du module logistique nu alternatif 700. Le module logistique nu alternatif 700 illustré à la figure 7 est en forme d'un roll conteneur et sera ainsi désigné roll nu alternatif 700 dans ce qui suit pour des raisons de convenance.

Le roll nu alternatif 700 correspond une version modifiée du roll nu 300 illustré à la figure 3 qui est obtenue en remplaçant les organes de verrouillage 321-328 par des organes de verrouillage alternatifs 701-708. Pour le reste, le roll nu alternatif 700 peut être identique, ou tout au moins similaire, au roll nu 300 illustré à la figure 3. Dans ce qui suit, c'est supposé être le cas.

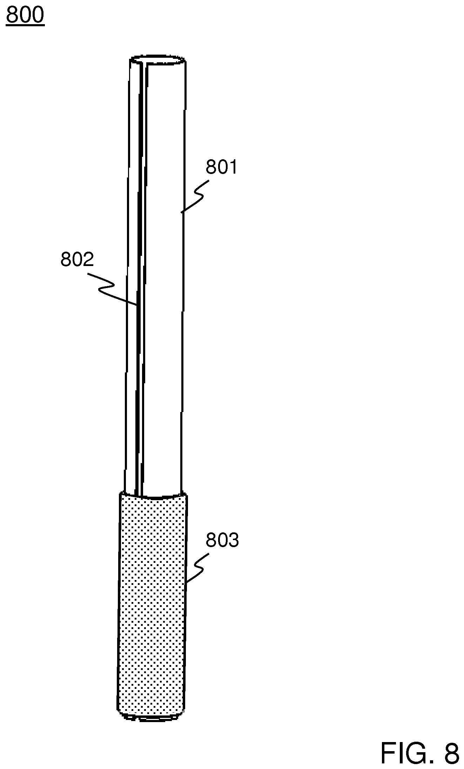

La figure 8 illustre schématiquement un organe de verrouillage alternatif 800 Cette figure présente une vue schématique en perspective de l'organe de verrouillage alternatif 800. L'organe de verrouillage alternatif 800 illustré à la figure 8 peut correspondre à un quelconque des organes de verrouillage alternatifs 701-708 sur le roll nu alternatif 700 illustré à la figure 7.

L'organe de verrouillage alternatif 800 comprend un tube 801 d'une matière présentant une certaine souplesse et présentant une fente longitudinale 802. Le tube 801 peut être, par exemple, en matière plastique. Un tel tube 801 peut ainsi se fixer sur un montant périphérique d'une ridelle par encliquetage. Le tube 801 peut être en butée contre une traverse horizontale de la ridelle concernée. Le tube 801 peut avoir une longueur particulière qui fait que le tube 801 est immobilisé en translation par deux traverses horizontales de la ridelle concernée.

Le tube 801 de l'organe de verrouillage alternatif 800 comprend une surface extérieure dont au moins une partie 803 est revêtue d'éléments auto-agrippant, par exemple, de type crochets. Pour ce faire, une feuille de revêtement auto-agrippant peut être apposée sur au moins une partie de la surface extérieure du tube. Par exemple, la feuille de revêtement auto-agrippant peut être apposée, par exemple, par collage. Une feuille de revêtement auto-agrippant peut être autocollante.

L'organe de verrouillage alternatif 800 peut pivoter autour du montant périphérique sur lequel l'organe de verrouillage alternatif 800 est fixé. En fait, le tube 801 de l'organe de verrouillage alternatif 800 peut s'apparenter à une charrière d'une porte. Ainsi, le montant périphérique peut constituer un axe de pivotement pour le volet antichute 100 illustré à la figure 1 lorsque celui-ci est fixé sur le roll nu alternatif 700.

Le volet antichute 100 illustré à la figure 1 peut être fixé sur le roll nu alternatif 700 d'une façon similaire à celle selon laquelle le volet antichute 100 est fixé sur le roll nu 300 illustré à la figure 3 comme décrit dans ce qui précède. Lorsque le volet antichute 100 a été fixé, celui-ci fonctionne d'une manière sensiblement similaire à celle selon laquelle le volet antichute 100 fonctionne sur le roll complet 400 comme décrit dans ce qui précède.

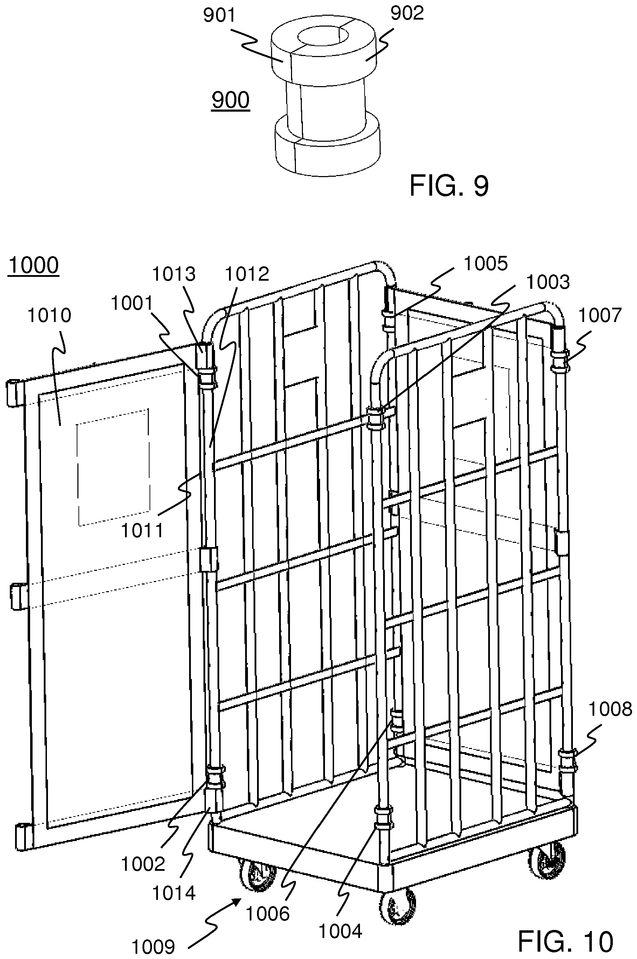

La figure 9 illustre schématiquement un autre organe de verrouillage alternatif 900. Cette figure présente une vue schématique en perspective de cet organe de verrouillage alternatif 900. L'organe verrouillage alternatif 900 illustré à la figure 9 est un organe d'épaississement et sera donc désigné organe d'épaississement 900 dans ce qui suit. Dans ce mode de réalisation, l'organe d'épaississement 900 comprend une paire d'éléments d'épaississement 901, 902 fixés l'un à l'autre, par exemple, par encliquetage. Les éléments d'épaississement 901, 902 peuvent être fixés l'un à l'autre autour d'un montant périphérique d'un roll container similaire au roll nu 300 illustré à la figure 3. Les éléments d'épaississement 901, 902 peuvent comprendre un revêtement intérieur élastique qui vient en contact avec le montant périphérique. Le revêtement intérieur élastique peut être, par exemple, en matière de caoutchouc.

La figure 10 illustre schématiquement un module logistique alternatif 1000 muni d'une pluralité d'organes d'épaississement 1001-1008 similaires à l'organe d'épaississement 900 illustrée à la figure 9. La figure 10 présente une vue schématique en perspective du module logistique alternatif 1000. Le module logistique alternatif 1000 illustré à la figure 10 comprend un roll conteneur 1009 similaire au roll nu 300 décrit dans ce qui précède en référence à la figure 3. En substance, les organes de verrouillage 321-328 du roll nu 300 ont été remplacés par les organes d'épaississement 1001-1008, qui constituent des organes de verrouillage alternatifs.

Le module logistique alternatif 1000 comprend un volet antichute 1010 similaire au volet antichute 100 décrit dans ce qui précède en référence à la figure 1. Le volet antichute 1010 comprend un bord gauche 1011 qui côtoie un montant périphérique avant gauche 1012 du roll conteneur. Une boucle de fixation fixe supérieure 1013 et une boucle de fixation fixe inférieure 1014, qui se situent sur ce bord gauche 1011, sont disposées autour du montant périphérique avant gauche 1012 du roll conteneur

Le volet antichute 1010 est maintenu tendu sur son bord gauche 1011 par deux organes d'épaississement: un organe d'épaississement gauche supérieur 1001 et un organe d'épaississement gauche inférieur 1002. La boucle de fixation fixe supérieure 1013 est en butée contre l'organe d'épaississement gauche supérieur 1001. La boucle de fixation fixe inférieure 1014 est en butée contre l'organe d'épaississement gauche inférieur 1002. Le volet antichute 1010 peut être convenablement tendu par un espacement approprié entre ces deux organes d'épaississement 1001, 1002.

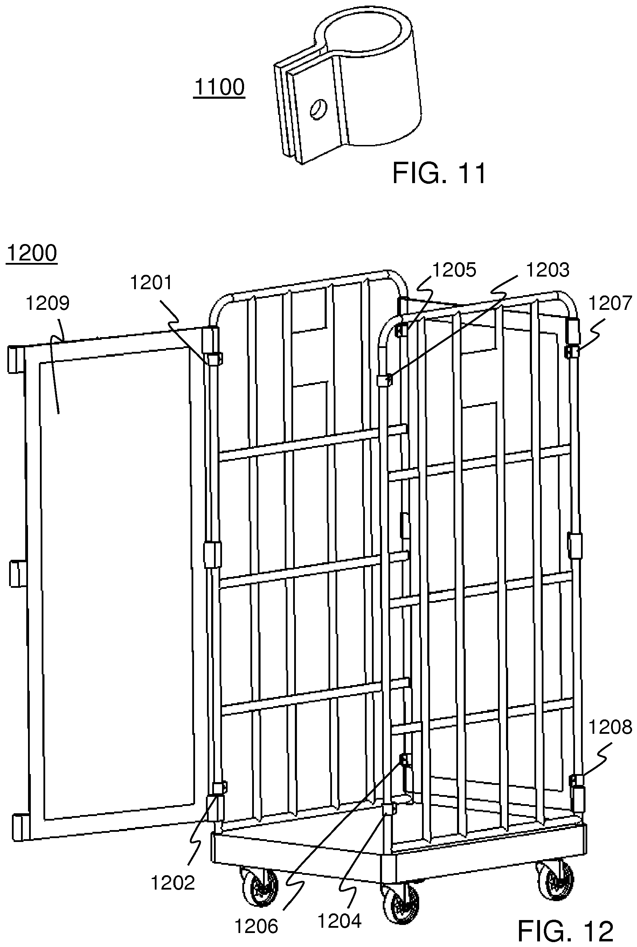

La figure 11 illustre schématiquement encore un autre organe de verrouillage alternatif 1100. Cette figure présente une vue schématique en perspective de cet autre organe de verrouillage alternatif 1100. L'organe verrouillage alternatif 1100 illustré à la figure 11 est en la forme d'un collier de serrage et sera désigné collier de serrage 1100 dans ce qui suit pour des raisons de convenance. Le collier de serrage 1100 peut être fixé autre autour d'un montant périphérique d'un roll container similaire au roll nu 300 illustré à la figure 3. Le collier de serrage 1100 peut comprendre un revêtement intérieur élastique qui vient en contact avec le montant périphérique. Le revêtement intérieur élastique peut être, par exemple, en matière de caoutchouc.

La figure 12 illustre schématiquement un autre module logistique alternatif 1200 muni d'une pluralité de colliers de serrage 1201-1208 similaires au collier de serrage 1100 illustré à la figure 11. La figure 12 présente une vue schématique en perspective du module logistique alternatif 1200. Le module logistique alternatif 1200 illustré à la figure 12 correspond en substance au module logistique alternatif 1000 illustré à la figure 10 dans lequel les organes d'épaississement 1001-1008 ont été remplacés par les colliers de serrage 1201-1208, qui constituent aussi des organes de verrouillage alternatifs. Les remarques faites à propos du module logistique alternatif 1000 illustré à la figure 10 s'appliquent de façon analogue module logistique alternatif 1200 illustré à la figure 12. Dans le module logistique alternatif 1200 illustré à la figure 12, les colliers de serrage 1201-1208 permettent de convenablement tendre un volet antichute 1209.

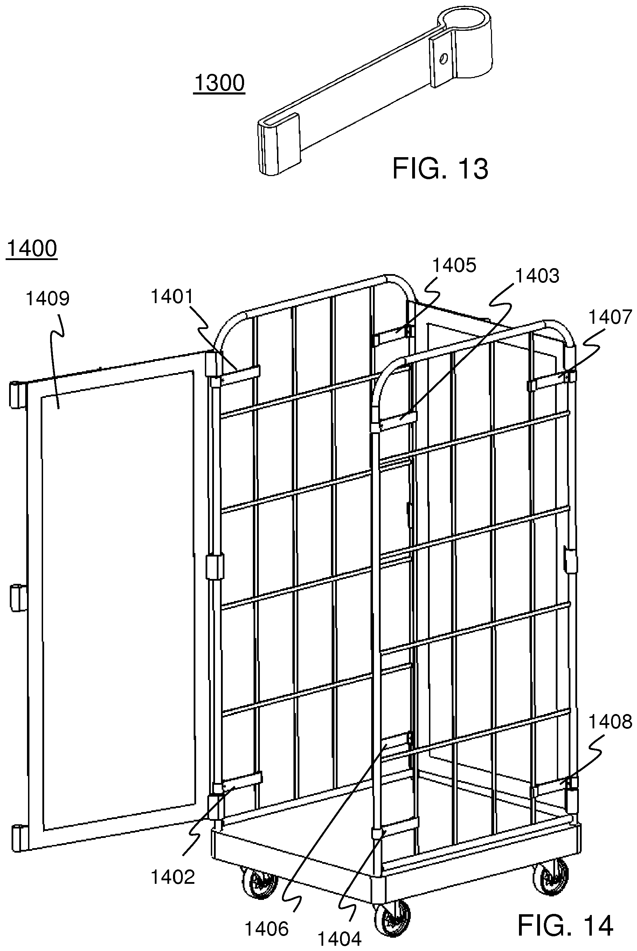

La figure 13 illustre schématiquement encore un autre organe de verrouillage alternatif 1300. Cette figure présente une vue schématique en perspective de cet autre organe de verrouillage alternatif 1300. L'organe verrouillage alternatif 1300 illustré à la figure 13 est en la forme d'un collier de serrage ayant une rallonge et sera désigné collier de serrage rallongé 1300 dans ce qui suit pour des raisons de convenance. Le collier de serrage rallongé 1300 peut être fixé entre deux montants adjacents d'un roll container similaire au roll nu 300 illustré à la figure 3. Une partie de serrage 1301 peut se fixer sur un montant périphérique du roll conteneur. Une partie de crochet 1302 peut s'engager dans un montant intermédiaire adjacent au montant périphérique. La partie de serrage 1301 peut comprendre un revêtement intérieur élastique qui vient en contact avec le montant périphérique. Le revêtement intérieur élastique peut être, par exemple, en matière de caoutchouc.

La figure 14 illustre schématiquement encore un autre module logistique alternatif 1400 muni d'une pluralité de colliers de serrage rallongés 1401-1408 similaires au de serrage rallongé 1300 illustré à la figure 13. La figure 14 présente une vue schématique en perspective du module logistique alternatif 1400. Le module logistique alternatif 1400 illustré à la figure 14 correspond en substance au module logistique alternatif 1000 illustré à la figure 10 dans lequel les organes d'épaississement 1001-1008 ont été remplacés par des colliers de serrage rallongés 1401-1408, qui constituent aussi des organes de verrouillage alternatifs. Les remarques faites à propos du module logistique alternatif 1000 illustré à la figure 10 s'appliquent de façon analogue au module logistique alternatif 1400 illustré à la figure 14. Les colliers de serrage rallongés 1401-1408 permettent de convenablement tendre un volet antichute 1409.

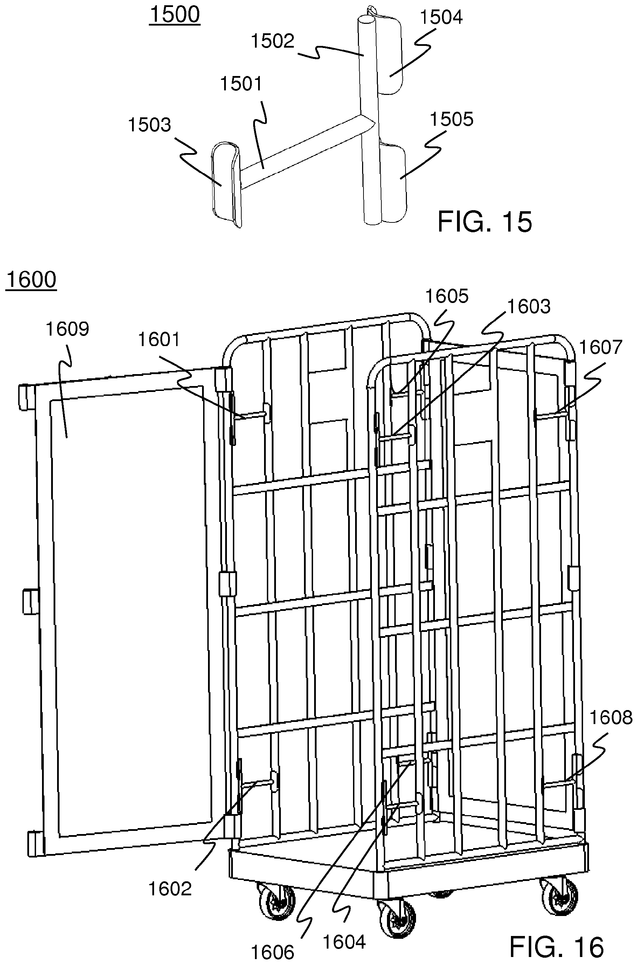

La figure 15 illustre schématiquement un encore autre organe de verrouillage alternatif 1500. Cette figure présente une vue schématique en perspective de cet organe de verrouillage alternatif 1500. L'organe verrouillage alternatif 1500 illustré à la figure 15 est un élément d'arrêt qui peut être inséré dans une ridelle similaire aux ridelles de roll nu 300 illustré à la figure 3. Cet organe de verrouillage sera désigné élément d'arrêt insérable 1500 dans ce qui suit pour des raisons de convenance.

Dans ce mode de réalisation, l'élément d'arrêt insérable 1500 est en forme de T, comprenant une section longitudinale 1501 et une section transversale 1502. L'élément d'arrêt insérable 1500 est muni de trois platines de contact 1503, 1504, 1505 partiellement cylindriques. Une platine de contact 1503 est disposée sur une extrémité de la section longitudinale 1501 opposée à celle qui est reliée à la section transversale 1502. Deux autres platines de contact 1504, 1505 sont disposées sur la section transversale 1502, respectivement sur une partie supérieure et une partie inférieure de cette section.

L'élément d'arrêt insérable 1500 peut être inséré entre deux montants adjacents d'une ridelle. La platine de contact 1503 sur l'extrémité de la section longitudinale 1501 vient alors en contact avec un des deux montants. Les deux platines de contact 1504, 1505 disposées sur la section transversale 1502 viennent en contact avec l'autre montant. L'élément d'arrêt insérable 1500 est déplaçable le long d'au moins une partie de l'un et de l'autre montant.

La figure 16 illustre schématiquement encore un autre module logistique alternatif 1600 muni d'une pluralité éléments d'arrêt insérables 1601-1608 similaires à l'élément d'arrêt insérable 1500 décrit dans ce qui précède en référence à la figure 15. La figure 16 présente une vue schématique en perspective du module logistique alternatif 1600. Le module logistique alternatif 1600 illustré à la figure 16 correspond en substance au module logistique alternatif 1000 illustré à la figure 10 dans lequel les organes d'épaississement 1001-1008 ont été remplacés par des éléments d'arrêt insérables 1601-1608, qui constituent aussi des organes de verrouillage alternatifs. Les éléments d'arrêt insérables 1601-1608 permettent de convenablement tendre un volet antichute 1609.

Les éléments d'arrêt insérables 1601-1608 peuvent être déplacés dans un sens vertical comme indiqué dans ce qui précède en référence à la figure 15. Cette caractéristique peut contribuer à convenablement tendre le volet antichute 1609.

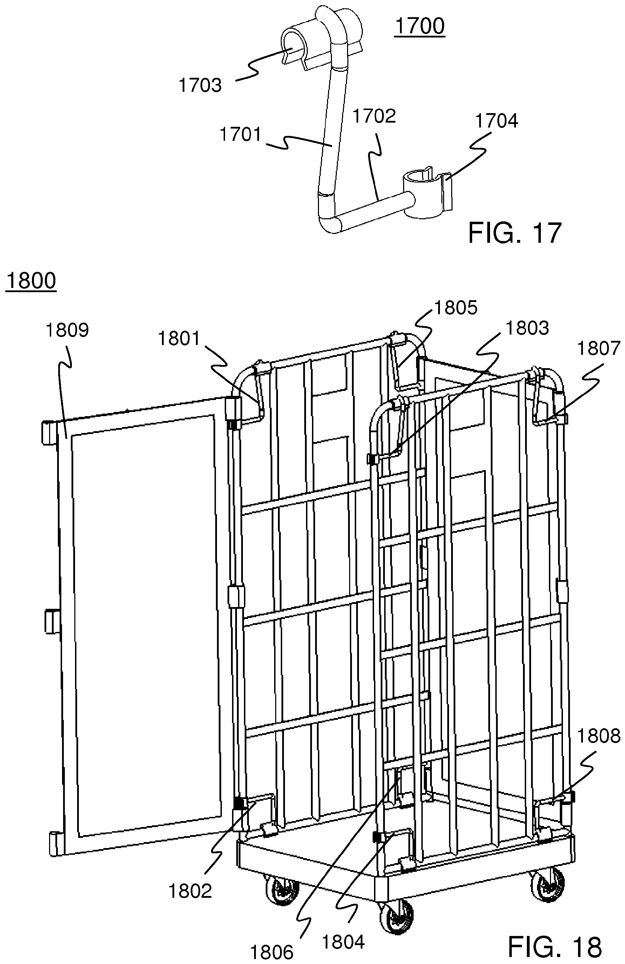

La figure 17 illustre schématiquement un encore autre organe de verrouillage alternatif 1700. Cette figure présente une vue schématique en perspective de cet organe de verrouillage alternatif 1700. L'organe verrouillage alternatif 1700 illustré à la figure 17 est un élément en forme d'équerre qui peut être inséré dans une ridelle similaire aux ridelles de roll nu 300 illustré à la figure 3. Cet organe de verrouillage sera désigné équerre 1700 dans ce qui suit pour des raisons de convenance.

Dans ce mode de réalisation, l'équerre 1700 comprend une section longitudinale 1701 et une section transversale 1702. L'équerre 1700 est munie de deux têtes d'encliquetage 1703, 1704. Une tête d'encliquetage 1703 est disposée sur une extrémité de la section longitudinale 1701 opposée à celle qui fait corps avec la section transversale 1702. L'autre tête d'encliquetage 1704 est disposée sur une extrémité de la section transversale 1702 qui fait corps avec la section longitudinale 1701. L'équerre 1700 peut être insérée entre un montant périphérique et une traverse périphérique d'une ridelle. La tête d'encliquetage 1703 sur la section longitudinale 1701 s'engage avec la traverse périphérique. La tête d'encliquetage 1704 sur la section transversale 1702 de l'équerre 1700 s'engage avec le montant périphérique.

La figure 18 illustre schématiquement d'encore un module logistique alternatif 1800 muni d'une pluralité d'équerres 1801-1808 similaires à l'équerre 1700 décrite dans ce qui précède en référence à la figure 17. La figure 18 présente une vue schématique en perspective du module logistique alternatif 1800. Le module logistique alternatif 1800 illustré à la figure 18 correspond en substance au module logistique alternatif 1000 illustré à la figure 10 dans lequel les organes d'épaississement 1001-1008 ont été remplacés par les équerres 1801-1808, qui constituent aussi des organes de verrouillage alternatifs. Les équerres 1801-1808 permettent de convenablement tendre un volet antichute 1809.

### NOTES

Les modes de réalisation décrits dans ce qui précède en référence aux dessins sont présentés à titre d'illustration. L'invention peut être mise en œuvre de nombreuses façons différentes. Afin d'illustrer cela, quelques alternatives sont indiquées sommairement.

L'invention peut être mise en œuvre dans de nombreux types de produits et procédés logistiques. L'invention peut mise en œuvre dans tout type de module logistique comprenant un montant côtoyant un côté d'un accès à un espace de chargement. Dans les modes de réalisations présentés, le module logistique est un roll conteneur. Dans d'autres modes de réalisations, le module logistique peut être un conteneur dépourvu de roulettes. Un accès à un espace de chargement peut se situer entre deux parois disposées dans un même plan, dans lequel l'accès se situe également. De façon globale, le terme « module logistique » doit donc être interprété de façon large. Ce terme embrasse toute entité dans laquelle des objets peuvent être placés pour des besoins de stockage ou de transport.

Il existe de nombreuses façons de mettre en œuvre un module logistique conforme à l'invention. Dans les modes de réalisation présentés, un module logistique comprend huit organes de verrouillage. Dans d'autres modes de réalisation, un module logistique peut comprendre moins d'organes de verrouillage, voire qu'un seul organe de verrouillage. Par exemple, un volet antichute peut être suffisamment bien tendu avec un seul organe de verrouillage, qui maintien une boucle de fixation en position fixe, lorsque les autres boucles de verrouillage sont en butée contre des traverses ou d'autres éléments. Un module logistique peut également comprendre plus de huit organes de verrouillage, par exemple, pour permettre l'utilisation de différents volets antichute. Dans les modes de réalisation présentés, un module logistique comprend deux parois, désignées par le terme ridelles, qui sont essentiellement formées par des grilles Dans d'autres modes de réalisation, un module logistique peut comprendre plus de parois. Une paroi peut comprendre, par exemple, une plaque, ou une feuille, disposée entre deux montants au lieu d'une grille,

Il existe de nombreuses façons de mettre en œuvre un volet antichute dans un module logistique conforme à l'invention. Dans les modes de réalisation présentés, un volet antichute comprend trois boucles de fixation autour d'un montant côtoyant un côté d'un accès à un espace de chargement. Dans d'autres modes de réalisation, un volet antichute peut comprendre deux boucles de fixation seulement, ou plus de boucles de fixation. Dans les modes de réalisation présentés, un volet antichute comprend des bandes de renforts. Dans d'autres modes de réalisation, un volet antichute peut être totalement dépourvu de bandes de renfort dans le cas où, par exemple, le volet antichute présente une rigidité suffisamment bonne pour que le volet antichute puisse résister à une pression exercée par une marchandise se butant contre le volet antichute. Par ailleurs, un ourlet peut former une bande de renfort, qui peut s'étendre entre deux boucles de fixations.

Il existe de nombreuses façons de mettre en œuvre un organe de verrouillage dans un module logistique conforme à l'invention. Les modes de réalisation présentés diffèrent les unes des autres principalement en termes. d'organes de verrouillage qu'ils comprennent. Ainsi, plusieurs exemples d'organes de verrouillage ont été présentés à titre d'illustration. Dans d'autres modes de réalisation, un organe de verrouillage peut comprendre, par exemple, un ressort, ou un autre élément résilient, qui pourrait contribuer à maintenir le volet antichute suffisamment bien tendu.

Certains modes de réalisation présentés peuvent aussi être résumés comme suit. Un module logistique apte à stocker, au moins temporairement, des marchandises, comprend deux montants avec une ouverture laissée entre les deux montants. Au moins un des deux montants est muni des deux pièces de maintien de volet, L'une et l'autre pièce de maintien de volet présente une surface extérieure comprenant des éléments auto-agrippant apte à être en prise avec une bande de fixation faisant excroissance d'un volet antichute. Une pièce de maintien de volet constitue donc un organe de verrouillage. Les deux termes sont interchangeables.

Les remarques qui précèdent montrent que la description détaillée en référence aux figures, illustre l'invention plutôt qu'elle ne la limite. Les signes de références n'ont aucun caractère limitatif. Les verbes « comprendre » et « comporter » n'excluent pas la présence d'autres éléments ou d'autres étapes que ceux listés dans les revendications. Le mot « un » ou « une » précédant un élément ou une étape n'exclu pas la présence d'une pluralité de tels éléments ou de telles étapes.

## Revendications

1. Module logistique (400) de type conteneur, le module logistique comprenant :
- un espace de chargement (304),
- un accès (305) à l'espace de chargement,
- un montant (307) côtoyant un côté de l'accès à l'espace de chargement,
- un volet antichute (100) apte à obturer au moins partiellement l'accès à l'espace de chargement, le volet antichute comprenant une boucle de fixation (401) autour du montant, la boucle de fixation se situant à une extrémité (108) d'un bord (101) du volet antichute côtoyant le montant,
- un organe de verrouillage (321, 701, 1001, 1201, 1401, 1601, 1801) disposé sur le montant, l'organe de verrouillage étant apte à maintenir la boucle de fixation en position fixe sur le montant lorsque le volet antichute exerce une force de tension sur la boucle de fixation, l'organe de verrouillage présentant une des caractéristiques suivantes :
- l'organe de verrouillage comprend une surface extérieure munie d'éléments auto agrippant apte être en prise avec la boucle de fixation, et
- l'organe de verrouillage constitue un épaississement sur le montant contre lequel la boucle de fixation est en butée.

2. Module logistique selon la revendication 1, dans lequel le volet antichute (100) comprend une autre boucle de fixation (402) sur une autre extrémité (109) du bord (101) du volet antichute, le module logistique comprenant un autre organe de verrouillage (322) disposé sur le montant (307), l' autre organe de verrouillage étant apte à maintenir l'autre boucle de fixation en position fixe sur le montant lorsque le volet antichute exerce une force de tension sur l'autre boucle de fixation.

3. Module logistique selon l'une quelconque des revendications 1 et 2 comprenant un autre montant (314) côtoyant un autre côté de l'accès (305) à l'espace de chargement (304), le volet antichute (100) comprenant un ruban (111) apte à former une boucle de fixation (404) autour de l'autre montant, le ruban se situant à une extrémité (114) d'un autre bord (102) du volet antichute côtoyant l'autre montant, le module logistique comprenant un autre organe de verrouillage (323) disposé sur l'autre montant, cet autre organe de verrouillage étant apte à maintenir la boucle de fixation formée par le ruban en position fixe sur l'autre montant lorsque le volet antichute exerce une force de tension sur la boucle de fixation formée par le ruban.

4. Module logistique selon la revendication 3, dans lequel le volet antichute (100) comprend un autre ruban (112) apte à former une autre boucle de fixation (405) sur une autre extrémité (115) de l'autre bord (102) du volet antichute, le module logistique comprenant encore un autre organe de verrouillage (324) disposé sur l'autre montant (314), cet autre organe de verrouillage étant apte à maintenir l'autre boucle de fixation formée par l'autre ruban en position fixe sur l'autre montant lorsque le volet antichute exerce une force de tension sur l'autre boucle de fixation formée par l'autre ruban.

5. Module logistique selon l'une quelconque des revendications 1 à 4, dans lequel le volet antichute (100) comprend :
- une feuille d'obturation (119),
- un ruban de fixation (105) solidaire à la feuille d'obturation, la boucle de fixation (401) étant formée par le ruban de fixation replié sur lui-même autour du montant (307).

6. Module logistique selon la revendication 5, dans lequel le volet antichute (100) comprend une bande de renfort (120) solidaire à la feuille d'obturation (119), le ruban de fixation (105) constituant un prolongement de la bande renfort.

7. Module logistique selon l'une quelconque des revendications 1 à 6 comprenant :
- une embase (301),
- une ridelle (302) montée verticalement sur l'embase, la ridelle délimitant partiellement l'espace de chargement (304), le montant (307) faisant partie de la ridelle.

8. Module logistique selon la revendication 7, dans lequel la ridelle (302) comprend une grille (309), le montant constituant un bord vertical de la grille.

9. Module logistique selon l'une quelconque des revendications 1 à 8, dans lequel l'organe de verrouillage (701) comprend un élément tubulaire (800) fixé par encliquetage sur le montant, l'élément tubulaire comprenant la surface extérieure munie d'éléments auto agrippant.

10. Module logistique selon l'une quelconque des revendications 1 à 8, l'organe de verrouillage (1001) comprenant une paire d'éléments d'épaississement (901, 902) fixés l'un à l'autre autour du montant.

11. Module logistique selon l'une quelconque des revendications 1 à 8, l'organe de verrouillage (1201) comprenant un collier de serrage.

12. Module logistique selon l'une quelconque des revendications 1 à 8, dans lequel l'organe de verrouillage (1401, 1601, 1801) est fixé entre le montant et un autre élément de grille, la boucle de fixation étant en butée contre l'organe de verrouillage.

13. Module logistique selon la revendication 12, dans lequel l'organe de verrouillage (1601) est déplaçable le long d'au moins une partie du montant.

## Patentansprüche

1. Logistikmodul (400) vom Containertyp, wobei das Logistikmodul umfasst:
- einen Laderaum (304),
- einen Zugang (305) zum Laderaum,
- einen Pfosten (307) neben einer Seite des Zugangs zum Laderaum,
- eine Sturzverhütungsklappe (100), die angepasst ist, um den Zugang zum Laderaum zumindest teilweise zu schließen, wobei die Sturzverhütungsklappe eine Befestigungsschlaufe (401) um den Pfosten herum aufweist, wobei sich die Befestigungsschlaufe an einem Ende (108) eine Kante (101) der Sturzverhütungsklappe neben dem Pfosten befindet,
- ein Verriegelungselement (321, 701, 1001, 1201, 1401, 1601, 1801), das auf den Pfosten angeordnet ist, wobei das Verriegelungselement angepasst ist um die Befestigungsschlaufe in einer festen Position am Pfosten zu halten, wenn die Sturzverhütungsklappe Spannkraft auf die Befestigungsschlaufe ausübt, wobei das Verriegelungselement eines der folgenden Merkmale aufweist:
- das Verriegelungselement umfasst eine Außenfläche, die mit selbstgreifenden Elementen versehen ist, die in die Befestigungsschlaufe eingreifen können, und
- das Verriegelungselement stellt eine Verdickung des Pfostens dar, gegen den sich die Befestigungsschlaufe im Widerlager befindet.

2. Logistikmodul nach Anspruch 1, wobei die Sturzverhütungsklappe (100) eine andere Befestigungsschlaufe (402) an einem anderen Ende (109) der Kante (101) der Sturzverhütungsklappe umfasst, wobei das Logistikmodul ein anderes Verriegelungselement (322) umfasst das auf dem Pfosten (307) angeordnet ist, wobei das andere Verriegelungselement angepasst ist um die andere Befestigungsschlaufe in einer festen Position auf dem Pfosten zu halten, wenn die Sturzverhütungsklappe eine Spannkraft auf die andere Befestigungsschlaufe ausübt.

3. Logistikmodul nach einem der Ansprüche 1 und 2, umfassend einen anderen Pfosten (314) neben einer anderen Seite des Zugangs (305) zum Laderaum (304), wobei die Sturzverhütungsklappe (100) ein Band (111) umfasst, das angepasst ist, um eine Befestigungsschlaufe (404) um den anderen Pfosten zu bilden, wobei sich das Band an einem Ende (114) einer anderen Kante (102) der Sturzverhütungsklappe neben dem anderen Pfosten befindet, wobei das Logistikmodul ein anderes Verriegelungselement (323) umfasst das auf dem anderen Pfosten angeordnet ist, wobei dieses andere Verriegelungselement angepasst ist, um die durch das Band gebildete Befestigungsschlaufe in einer festen Position auf dem anderen Pfosten zu halten, wenn die Sturzverhütungsklappe eine Spannkraft auf die durch das Band gebildete Befestigungsschlaufe ausübt.

4. Logistikmodul nach Anspruch 3, bei dem die Sturzverhütungsklappe (100) ein anderes Band (112) umfasst, das angepasst ist, um eine andere Befestigungsschlaufe (405) an einem anderen Ende (115) der anderen Kante (102) der Sturzverhütungsklappe ,zu bilden, wobei das Logistikmodul ein weiteres Verriegelungselement (324) umfasst, das auf dem anderen Pfosten (314) angeordnet ist, wobei dieses andere Verriegelungselement angepasst ist, um die durch das andere Band gebildete Befestigungsschlaufe in einer festen Position auf dem anderen Pfosten zu halten, wenn der Sturzverhütungsklappe eine Spannkraft auf die durch das andere Band gebildete andere Befestigungsschlaufe ausübt.

5. Logistikmodul nach einem der Ansprüche 1 bis 4, wobei der Sturzverhütungsklappe (100) umfasst:
- eine Abdeckfolie (119),
- ein Befestigungsband (105), das an die Abdeckfolie befestigt ist, wobei die Befestigungsschlaufe (401) durch das Befestigungsband gebildet wird, das über sich selbst um den Pfosten (307) gefaltet ist.

6. Logistikmodul nach Anspruch 5, bei dem die Sturzverhütungsklappe (100) ein Verstärkungsband (120) umfasst, der in der Abdeckfolie (119) integriert ist, wobei das Befestigungsband (105) eine Verlängerung des Verstärkungsbands bildet.

7. Logistikmodul nach einem der Ansprüche 1 bis 6, umfassend:
- eine Basis (301),
- eine Seite (302), die vertikal an der Basis angebracht ist, wobei die Seiet den Laderaum (304) teilweise begrenzt, wobei der Pfosten (307) Teil der Seite ist.

8. Logistikmodul nach Anspruch 7, bei dem die Seite (302) ein Gitter (309) umfasst, wobei der Pfosten eine vertikale Kante des Gitters bildet.

9. Logistikmodul nach einem der Ansprüche 1 bis 8, wobei das Verriegelungselement (701) ein Rohrelement (800) umfasst, das durch Schnappverschluss am Pfosten befestigt ist, wobei das Rohrelement die Außenfläche umfasst, die mit dem selbstgreifenden Elementen versehen ist.

10. Logistikmodul nach einem der Ansprüche 1 bis 8, wobei das Verriegelungselement (1001) ein Paar von Verdickungselementen (901, 902) umfasst, die um den Pfosten herum aneinander befestigt sind.

11. Logistikmodul nach einem der Ansprüche 1 bis 8, wobei das Verriegelungselement (1201) eine Klammer umfasst.

12. Logistikmodul nach einem der Ansprüche 1 bis 8, bei dem das Verriegelungselement (1401, 1601, 1801) zwischen dem Pfosten und einem anderen Gitterelement befestigt ist, wobei die Befestigungsschlaufe am Widerlager gegen das Verriegelungselement anliegt.

13. Logistikmodul nach Anspruch 12, bei dem das Verriegelungselement (1601) entlang mindestens eines Teils des Pfostens beweglich ist.

## Claims

1. A logistics module (400) of the container type, the logistics module comprising:
- a loading space (304),
- an access (305) to the loading space,
- an upright (307) alongside one side of the access to the loading space,
- a fall-prevention flap (100) adapted to at least partially close the access to the loading space, the fall-prevention flap comprising a fixing loop (401) around the upright, the fixing loop being located at one end (108) of an edge (101) of the fall-prevention flap alongside the upright,
- a locking member (321, 701, 1001, 1201, 1401, 1601, 1801) disposed on the upright, the locking member being adapted to maintain the fixing loop in a fixed position on the upright when the fall-prevention flap exerts a tension force on the fixing loop, the locking member having one of the following characteristics:
- the locking member comprises an external surface provided with self-gripping elements adapted to be engaged with the fixing loop, and
- the locking member constitutes a thickening on the upright against which the fixing loop is in abutment.

2. A logistics module according to claim 1, in which the fall-prevention flap (100) comprises another fixing loop (402) on another end (109) of the edge (101) of the fall-prevention flap, the logistics module comprising another locking member (322) disposed on the upright (307), the other locking member being adapted to maintain the other fixing loop in a fixed position on the upright when the fall-prevention flap exerts a tension force on the other fixing loop.

3. A logistic module according to any one of claims 1 and 2 comprising another upright (314) alongside another side of the access (305) to the loading space (304), the fall-prevention flap (100) comprising a ribbon (111) adapted to form a fixing loop (404) around the other upright, the ribbon being located at one end (114) of another edge (102) of the fall-prevention flap alongside the other upright, the logistics module comprising another locking member (323) disposed on the other upright, this other locking member being adapted to maintain the fixing loop formed by the ribbon in a fixed position on the other upright when the fall-prevention flap exerts a tension force on the fixing loop formed by the ribbon.

4. A logistics module according to claim 3, in which the fall-prevention flap (100) comprises another ribbon (112) adapted to form another fixing loop (405) on another end (115) of the other edge (102) of the fall-prevention flap, the logistics module comprising yet another locking member (324) disposed on the other upright (314), this other locking member being adapted to maintain the other fixing loop formed by the other ribbon in a fixed position on the other upright when the fall-prevention flap exerts a tension force on the other fixing loop formed by the other ribbon.

5. A logistics module according to any one of claims 1 to 4, in which the fall-prevention flap (100) comprises
- a closure sheet (119),
- a fixing ribbon (105) secured to the closure sheet, the fixing loop (401) being formed by the fixing ribbon folded back on itself around the upright (307).

6. A logistics module according to claim 5, in which the fall-prevention flap (100) comprises a reinforcing ribbon (120) secured to the closure sheet (119), the fixing ribbon (105) constituting an extension of the reinforcing ribbon.

7. A logistics module according to any one of claims 1 to 6 comprising:
- a base (301),
- a side panel (302) mounted vertically on the base, the side panel partially delimiting the loading space (304), the upright (307) being part of the side panel..

8. A logistics module according to claim 7, in which the side panel (302) comprises a grid (309), the upright constituting a vertical edge of the grid.

9. A logistic module according to any one of claims 1 to 8, in which the locking member (701) comprises a tubular element (800) fixed by snap-fastening to the upright, the tubular element comprising the external surface provided with self-gripping elements.

10. A logistic module according to any one of claims 1 to 8, the locking member (1001) comprising a pair of thickening elements (901, 902) fixed to each other around the upright.

11. A logistics module according to any one of claims 1 to 8, the locking member (1201) comprising a clamp.

12. A logistic module according to any one of claims 1 to 8, in which the locking member (1401, 1601, 1801) is fixed between the upright and another grid element, the fixing loop being in abutment against the locking member.

13. A logistics module according to claim 12, in which the locking member (1601) is movable along at least part of the upright.
